# EUROPEAN PATENT APPLICATION

(11) **EP 4 553 103 A1**
(43) Date of publication of application: **14.05.2025**
(21) Application number: 24220144.0
(22) Date of filing: 31.12.2021
(51) Int. Cl.: C08J 3/05, C08B 3/14, C08B 3/22, C08B 15/06

(54) **CONTINUOUS DISSOLUTION OF A CELLULOSE DERIVATIVE**

(30) Priority: 31.12.2020 FI 20206386
(62) Divisional of application: 21836590.6
(71) Applicant: Infinited Fiber Company Oy, 02150 Espoo (FI)
(72) Inventor: SIREN, Sakari, 02150 Espoo (FI); HARLIN, Ali, 02150 Espoo (FI); STJERNBERG, Martin, 02150 Espoo (FI)
(74) Representative: Laine IP Oy

(57) **Abstract**

According to an example aspect of the present invention, there is provided a method of dissolving cellulose carbamate in an alkaline aqueous phase to form a solution, comprising the steps of providing cellulose carbamate, mixing the cellulose carbamate with an aqueous alkaline solution to form a mixture, producing a solution of said cellulose carbamate in an alkaline aqueous phase, and recovering the cellulose carbamate containing aqueous phase.

## Description

### FIELD

The present invention relates to a method of dissolving a cellulose derivative. In particular, the present invention relates to a continuous method of dissolving cellulose carbamate

### BACKGROUND

Cellulose is the most widely used biopolymer in the world and it finds applications in various industries such as the paper and cardboard industry, and the textile industry as both cellulose and derivatives of cellulose, such as cellulose carbamate, cellulose acetate, ethers and esters. The use of cellulose in these industries, however, requires the cellulose fibre to be dissolved in order to regenerate the structure. The dissolution of cellulose is difficult because of its semi-crystalline structure, strong hydrogen bonds in the polymer sheets and the presence of both hydrophilic and hydrophobic ends in the polymer. For this reason, cellulose requires either a modification of the structure by derivatization or an opening of the fibres and an increase in reactivity.

Several methods of derivatization are known in the art, the most well-known perhaps being the viscose process, in which cellulose is first treated with an alkali and then with carbon disulphide to produce cellulose xanthate. The viscose process is shunned more and more due to the toxic nature of carbon disulfide and the undesirable environmental impact that the viscose process has. More and more, other derivatization processes are being turned to, particularly those that are inexpensive, do not have the toxicity issues and environmental issues of the viscose process and yet still can be carried out using the available infrastructure, *e.g*. can be carried out in viscose wet spinning mills.

The carbamation process for the production of cellulose carbamate is one such derivatization process. Cellulose carbamate is formed by reacting cellulose with urea. Methods of producing cellulose carbamate are described *e.g*. in Finnish Patents Nos. 112869 and 112795.

As mentioned above, the cellulose or the cellulose derivative must be dissolved in order to regenerate the cellulose structure for use in various industrial applications. The procedure for dissolving cellulose in aqueous alkali is based on a freezethaw method. The solvent is pre-cooled to below the freezing point of water before cellulose is added and kept cold until the polymer is completely dissolved. The temperature required for efficient dissolution in a freezing-thawing process was found to be in the region of -30 degrees Celsius for the entire mixture of cellulose carbamate in aqueous solution. Thus, the freezing and thawing of polymer solutions on an industrial scale is impractical both energetically and economically, since dope production on an industrial scale would require the use of efficient freezing devices that are not usually found in cellulosic fibre production plants. Both freezing and thawing consume energy and time, and reduce the overall efficiency and sustainability of the process.

Traditional dissolution methods such as freezing-thawing often leads to the phase separation during the prolonged freezing phase in the process or difficulties with the temperature control during the freezing and thawing phases. This may result in fluctuation of the composition of the obtained cellulose solution, the agglomeration of particles, *i.e* particles that remain undissolved and "glue" together forming clusters that are difficult or even impossible to separate by the subsequent filtration process, in addition to that gelling of the obtained cellulose solution may also resulted induced by the undissolved particles or uncontrolled process temperatures. Nitrogenous hydrolysis is simultaneously accelerated during the prolonged freezing and thawing or by the uncontrolled process temperatures. Challenges related to mitigation of undissolved residues has been partially overcome by making only very dilute solutions of cellulose or by gradual addition of cellulose in batch mixing processes. Traditional freezing and thawing process or operations with diluted cellulose solutions cause unacceptable costs in economy and time.

### SUMMARY OF THE INVENTION

It is an aim of the present invention to overcome at least some of the problems described above and provide a method of continuously dissolving cellulose carbamate in an alkaline aqueous phase to form a solution.

The method involves mixing cellulose carbamate with an aqueous alkaline solution and conducting the thus formed mixture through the mixing zone of a continuously operated kneader type dissolving reactor to produce a solution of cellulose carbamate in an alkaline aqueous phase. The cellulose carbamate containing aqueous phase is recovered. The step of continuously conducting the mixture through the mixing zone of the kneader type dissolving reactor is carried out at a temperature of 10 degrees Celsius or less.

The invention is defined by the features of the independent claims. Some specific embodiments are defined in the dependent claims.

According to a first aspect of the present invention, there is provided a method of continuously dissolving cellulose carbamate polymer in an alkaline aqueous phase to form a solution, said method comprising the steps of providing cellulose carbamate polymer, mixing the cellulose carbamate polymer with an aqueous alkaline solution to form a mixture, conducting the mixture through the mixing zone of a continuously operated kneader type dissolving reactor to produce a solution of said cellulose carbamate polymer in an alkaline aqueous phase, and recovering the dissolved cellulose carbamate polymer containing aqueous phase. The step of continuously conducting the mixture through the mixing zone of the kneader type dissolving reactor of said method is carried out at a temperature of 10 degrees Celsius or less.

Considerable advantages are obtained by means of the invention. The present invention provides a method of continuously dissolving cellulose carbamate polymer in an alkaline solution. Cellulose carbamate polymer is an alkali labile cellulose derivative. By means of the present invention it has been surprisingly found that cellulose carbamate polymer can be dissolved in a high cellulose consistency to obtain a cellulose carbamate spinning dope with a lower viscosity than mathematically and experimentally expected by means of conventional dissolving methods known in the art. This was especially demonstrated in case of the dissolving operation performed under super-cooled conditions.

It has also surprisingly been found that the obtained cellulose carbamate spinning dope is stable for long periods of time even at room temperature. Typically, cellulose carbamate dopes must be stored at reduced temperatures to avoid gelling of the cellulose carbamate solution.

### BRIEF DESCRIPTION OF THE DRAWINGS

FIGURE 1 is a flow diagram illustrating a process for continuous dissolution of cellulose carbamate in accordance with at least some embodiments of the present invention;
FIGURE 2 is a flow diagram illustrating a process for continuous dissolution of cellulose carbamate in accordance with at least some embodiments of the present invention;
FIGURE 3 is a compilation of microscope images showing the impact of the dissolving temperature and sodium hydroxide concentration on dissolving of recycled cotton derived cellulose carbamate;
FIGURE 4 show microscope images indicating the stability of the pre-slurry in a two-stage dissolving process;
FIGURE 5 depicts graphically the stability of the cellulose carbamate polymer slurry in aqueous alkaline solution in terms of viscosity as a function of shear rate;
FIGURES 6A to 6C show micrographs of recovered solutions of cellulose carbamates; and
FIGURES 7A to 7F show micrographs of solutions of cellulose carbamates disclosed in Example 9.

### EMBODIMENTS

### DEFINITIONS

In the present context, the following terms are defined to have the following meanings unless mentioned otherwise.

"Low temperature conditions" stand for temperatures in the range of 5 degrees Celsius to -6.9 degrees Celsius.

"Super-cooled conditions" stand for temperatures lower than those prevailing at low temperature conditions, in particular it stands for temperatures in the range of -7 degrees Celsius to -20 degrees Celsius

Chemical pulp or dissolving pulp prepared from wood species such as pine, spruce, birch, beech, aspen, maple, larch, acacia, eucalyptus, hemlock, tupelo, and oak or non-woods such as stalk fibres (wheat straw, rice straw, barley straw, bamboo, bagasse and reed). The origin of the feedstock can be either the virgin form of the chemical or dissolving pulp or the recycled feedstocks such as recycled paper and/or cardboard containing chemical pulp or dissolving type pulp.

Natural plant fibres as such in or in the form of chemical pulp or dissolving pulp. The origin of natural plant fibres can be either their virgin forms or natural plant fibre containing textiles or recycled natural fibre containing textiles. Natural plant fibres include seed fibres such as cotton and kapok; bast fibres such as hemp, jute, kenaf, ramie, abaca and linen (flax); leaf fibres such as manilla, sisal, ananas and banana; fruit fibres such as coir.

Continuous dissolution of cellulose carbamate with an aqueous alkaline solution and conduction of the mixture of cellulose carbamate and aqueous alkaline through the mixing zone of a continuously operated mixing kneader at a temperature of 10 degrees Celsius or less produces a solution of cellulose carbamate in an alkaline aqueous phase having a relatively high cellulose carbamate concentration. The cellulose carbamate typically dissolves completely leaving essentially no undissolved cellulose-derived particles, ensuring an improved filterability of cellulose carbamate dope, which can be characterized e.g. by means of filterability index (K_{R}) measurement. The improved filterability is technically essential when cellulose carbamate is regenerated from the recovered cellulose carbamate containing aqueous phase.

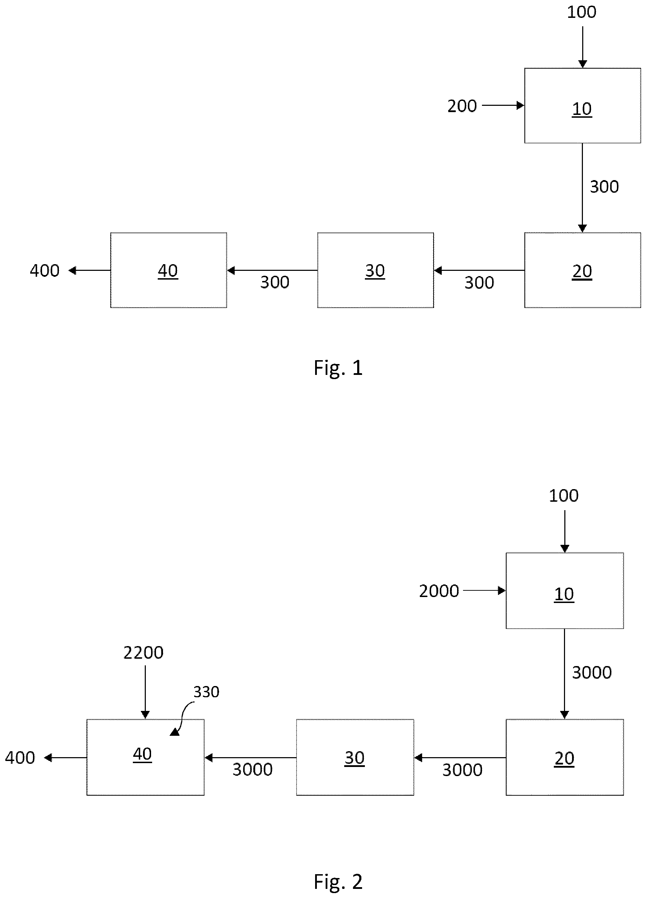

FIGURE 1 is a flow diagram illustrating a process for continuous dissolution of cellulose carbamate in accordance with at least some embodiments of the present invention.

Cellulose carbamate 100 in solid form is weighed and fed into a pulper 10. The total amount of an aqueous solution of sodium hydroxide 200 required for dissolution of the weighed cellulose carbamate 100 is added into the pulper 10. The alkaline solution 200 may be added either in one batch or gradually. The pulper 10 is started and a mixture 300 comprising cellulose carbamate in aqueous alkaline solution is formed. The mixture 300 is directed to a storing tank 20, equipped with a mixer. The storing tank 20 may be a chest storing tank. After the mixture 300 is directed to the storing tank 20 the pulper 10 is ready for the next batch of cellulose carbamate 100 and aqueous solution of sodium hydroxide 200. The storing tank 20 has a higher volume than the pulper 10 and can contain more than one batch of mixture 300 directed from the pulper 10. The mixture 300 is continuously fed with a pump 30 from the storing tank 20 into the mixing zone of the kneader type dissolving reactor 40. The temperature of the mixture 300 is suitably lowered but kept above the limit of solubility of the system during process stages prior to the dissolving reactor 40. A solution of cellulose carbamate in aqueous alkaline solution 400 is continuously formed in the dissolving reactor 40 and recovered.

FIGURE 2 is a flow diagram illustrating a process for continuous dissolution of cellulose carbamate in accordance with at least some embodiments of the present invention.

Cellulose carbamate 100 in solid form is weighed and fed into a pulper 10. A first portion of an aqueous solution of sodium hydroxide 2000 required for formation of pre-slurry with the weighed cellulose carbamate 100 is added into the pulper 10. The pulper 10 is started and a pre-slurry 3000 comprising cellulose carbamate in aqueous alkaline solution is formed.

The pre-slurry 3000 is directed into a storing tank 20 equipped with a mixer. After the pre-slurry 3000 is directed to the storing tank 20 the pulper 10 is ready for the next batch of cellulose carbamate 100 and the next first portion of an aqueous solution of sodium hydroxide 2000. The storing tank 20 has a higher volume than the pulper 10 and can contain more than one batch of the pre-slurry 3000 directed from the pulper 10. The pre-slurry is continuously fed from the storing tank 20 by using a pump 30 into the mixing zone of the kneader type dissolving reactor 40. A second portion of alkaline solution 2200 is added with the pre-slurry 3000 into the dissolving reactor 40 to provide a mixture 330. The mixture 330 is formed in the dissolving reactor. The temperature of the pre-slurry 3000 is kept above the limit of solubility of the system during process stages prior to the dissolving reactor 40. A solution of cellulose carbamate in aqueous alkaline solution 400 is continuously formed in the dissolving reactor 40 and recovered.

As described above, the present technology relates to a method of dissolving cellulose carbamate.

Generally, the present technology provides a method of continuously dissolving cellulose carbamate in an alkaline aqueous phase to form a solution, comprising the steps of providing cellulose carbamate; mixing the cellulose carbamate with an aqueous alkaline solution to form a mixture; producing from said mixture a solution of said cellulose carbamate in an alkaline aqueous phase; and recovering the cellulose carbamate containing aqueous phase wherein the step of producing the solution is carried out at a temperature of 10 degrees Celsius or less.

In an embodiment, the method of continuously dissolving cellulose carbamate in an alkaline aqueous phase to form a solution comprises the steps of providing cellulose carbamate, mixing the cellulose carbamate with an aqueous alkaline solution to form a mixture, conducting the mixture through the mixing zone of a continuously operated kneader type mixing reactor to produce a solution of said cellulose carbamate in an alkaline aqueous phase *e.g*. cellulose carbamate dope or cellulose carbamate spinning dope, and recovering the cellulose carbamate containing aqueous phase.

In one embodiment the step of continuously conducting the mixture through the mixing zone of the mixing kneader is carried out at a temperature of 10 degrees Celsius or less.

In a further embodiment cooling takes place in the mixing zone of the mixing kneader. Thus, in one embodiment the mixture is conducted through a mixing and cooling zone of the mixing kneader.

In one embodiment, the step of producing said solution from said mixture is carried out on the cooled metal surface or a cooled cylinder, for example a cooled rotating drum.

In an embodiment the cellulose carbamate may be a cellulose carbamate produced from chemical or dissolving pulp prepared from wood fibres or non-wood fibres or a cellulose carbamate derived from natural plant fibres as such in or in the form of chemical pulp or dissolving type pulp. Embodiments of the method may also be carried out using cellulose carbamate produced from mixtures of any of the various cellulosic fibres or pulps described above. In a suitable embodiment the cellulose carbamate is manufactured in a process comprising the steps of providing a pulp, adding to the pulp (or optionally to the activated pulp) an aqueous solution of urea and optionally hydrogen peroxide to provide a mixture, mechanically working the mixture to provide a homogeneous composition, heating the composition to a temperature in the range of 120 to 155 degrees Celsius, typically 135 degrees Celsius for a period in the range of 2 to 4 hours to produce cellulose carbamate, recovering the cellulose carbamate, and optionally washing the cellulose carbamate with water and drying in a dryer at a temperature less than or equal to 155 degrees Celsius, preferably 135 degrees Celsius or less, suitably 133 degrees Celsius or less.

In a further embodiment the mixture formed by the cellulose carbamate in the alkaline aqueous solution is subjected to mixing in the mixing zone of the kneader type mixing reactor with low shearing forces by running mixer with a reduced mixer speed of 10-500 rpm, suitably under 250 rpm, most suitably under 100 rpm, preferably under 50 rpm.

Mixing with low shearing forces allows a target temperature level to be reached and/or maintained. The dissolving process according to an embodiment is thus not dependent on high shear force mixing. A typical technical approach is to use high speed mixing in order to obtain a good quality solution. However, in embodiments the dissolving temperature is the most critical factor, not mixing speed or high shear forces in mixing. The more vigorous is the mixing, the more difficult it is to reach and/or maintain low dissolving temperatures. Dissolving at low temperatures and/or under super-cooled conditions provides a cellulose carbamate solution that is of a quality suitably adapted for spinning process. For example, in an embodiment the recovered solution is subjected to spinning process, for example wet spinning process to spin cellulose carbamate fibres.

The mixture of cellulose carbamate polymer and alkaline solution can be formed in various ways, each way of forming the mixture being adapted to the particular alkaline solution or alkaline solutions and the particular cellulose carbamate or cellulose carbamates forming the mixture.

In one specific embodiment, also referred to as a one-step method, the cellulose carbamate is first mixed with the alkaline solution, and the mixture thus obtained is fed into the mixing zone of the continuously operated kneader type dissolving reactor.

In one embodiment, precooling is achieved in a first kneader, whereby partial dissolution can be obtained, after which step the mixture is transferred to a second kneader in which the material is dissolved, typically completely or essentially completely.

Mixing the cellulose carbamate with the alkaline solution, to provide a composition corresponding to the final target chemical composition set for the cellulose carbamate dope to be recovered, before feeding the mixture into the mixing zone of the continuously operated kneader type dissolving reactor, allows for accurate control of the chemical composition of the obtained cellulose carbamate dope. Additionally, slurry handling (*e.g.* the pumping of the mixture) is technically easier because of the lower viscosity and slurry consistency in the slurry prepared to the final composition.

Mixing the cellulose carbamate with the alkaline solution, corresponding to the final target chemical composition set for the cellulose carbamate dope to be recovered, can be done in a mixing reactor *e.g.* in the pulper or in another type of homogenizer or in a suitable reactor e.g. in the xanthator type reactor or in a suitable reactor connected to a homogenizer in batches by directly or gradually adjusting the sodium hydroxide and/or the zinc oxide concentration in a pre-slurry and in order to affect to the swelling properties of cellulose carbamate derivative prior to adding the rest of alkali and/or zinc oxide containing alkali and water to reach the final target composition.

The temperature of the slurry in each slurrying stage can be controlled for example using pre-cooled solutions and/or by external cooling of the pulper or the other type of homogenizer or mixing reactor.

In a particular embodiment, which can be referred to as a two-step method, the cellulose carbamate is first mixed with a first portion of the alkaline solution or zinc oxide containing alkaline solution, and the pre-slurry thus obtained is fed into the mixing zone of the continuously operated kneader type dissolving reactor and a second portion of the alkaline solution or zinc oxide containing alkaline solution is fed into the mixing zone of the continuously operated kneader type dissolving reactor.

Feeding a pre-slurry of cellulose carbamate including a first portion of the alkaline solution into the mixing zone of the continuously operated kneader and separately feeding the second portion of the alkaline solution into the mixing zone of the continuously operated kneader provides an opportunity to precool the pre-slurry including the first portion of alkaline solution and the second portion of alkaline solution, separately to a specific temperature depending on their chemical compositions, prior to adding them into the mixing zone of the kneader type dissolving reactor. It is further possible to mix the preslurry with a second portion of the alkaline solution in a homogenizer before feeding the mixture thus obtained into a kneader.

The pre-slurry, i.e. the slurry with a sodium hydroxide content below the dissolving limit of the system, e.g. a pre-slurry having a sodium hydroxide content of about 2 to 6 %, for example about 3 or 4 % by weight, can be cooled near to the freezing point of the mixture without initiation of dissolving of cellulose carbamate. Sodium hydroxide or combination of sodium hydroxide and zinc oxide lowers the freezing point of its water solution. Cellulose carbamate raises the freezing point of its alkaline water solution, thus the freezing point is higher than -6 degrees Celsius if the cellulose carbamate content in pre-slurry is higher than 6 % by weight. E.g. a pre-slurry with a sodium hydroxide content of 3 % by weight and cellulose carbamate content of 6 % by weight can be cooled to as low as -6 degrees Celsius without freezing of the mixture or initiation of the dissolving of cellulose carbamate.

In the second portion of the alkaline solution, the sodium hydroxide or the combination of sodium hydroxide and zinc oxide lowers the freezing point of the aqueous phase and it is possible to precool this second portion of alkaline solution to a temperature on the level between -30 and -20 degrees Celsius. Further, this allows for adjustment of the alkaline, e.g. sodium hydroxide and/or zinc oxide, concentrations in the pre-slurry, which has an impact on swelling properties of the cellulose derivate in addition to the freezing point of the pre-slurry and solubility limit. The alkali concentration in the pre-slurry is related to the temperature at which dissolving the cellulose derivative is initiated. The higher the alkali concentration in the pre-slurry, the higher the temperature when dissolving of cellulose derivative is initiated, and similarly the lower the alkali concentration in the pre-slurry, the lower the temperature when dissolving is initiated. This allows for optimization of swelling of the cellulose derivative and optimization of the feeding temperature of the pre-slurry.

Preferably, the pre-slurry and the second portion of alkaline solution are simultaneously fed into the mixing zone of the continuously operated kneader. The chemical composition of the pre-slurry determines the chemical composition of the second portion of the alkaline solution. One aim of the optimization of the temperature and alkali concentration of pre-slurry is to prevent initiation of dissolving before the mixing zone of the dissolving reactor in avoid to contamination the pre-slurry handling system by the high viscosity cellulose carbamate solution.

The dissolution is carried out in either low temperature conditions or in super cooled conditions.

"Low temperature conditions" mean temperatures in the range of 5 degrees Celsius to -6.9 degrees Celsius or above. Thus, in one embodiment, the temperature of the mixing zone is in the range of 5 to -6.9 degrees Celsius. In a particular embodiment the temperature of the mixing zone is about 0 degrees Celsius. Temperatures of around 0 degrees Celsius, such as in the range of 5 to -6.9 degrees Celsius are particularly suitable for cellulose carbamates formed from chemical or dissolving pulp prepared from wood fibres or non-wood fibres such as commercial wood-based dissolving pulp, non-wood straw-based dissolving pulp or dissolving type pulp prepared from recycled paper and/or cardboard waste streams.

"Super cooled conditions" mean temperatures of -7 degrees Celsius or less, but not lower than -20 degrees Celsius. In a further embodiment the temperature of the mixing zone is -7 degrees Celsius or less. Temperatures in the mixing zone lower than -7 degrees Celsius, typically in the range of -7 to -20 degrees Celsius are particularly suitable for cellulose carbamates formed from chemical or dissolving type pulp containing or derived from natural plant fibres such as hemp, jute, or cotton based raw materials either from their virgin forms or from recycled feedstocks such as from recycled textiles.

In one preferred embodiment, dissolution is carried out at ca -15 to ca -20 degrees Celsius.

As will be discussed in some of the embodiments, the mixture of alkaline liquid and cellulose carbamate can be cooled by contacting it with a cooled surface. It is generally preferred that such contacting will achieve a cooling of the mixture essentially to the temperature of the cooled surface.

Thus in one embodiment the cellulose carbamate is manufactured from cellulose having wood and/or non-wood fibres in the form of dissolving pulp.

In a further embodiment the cellulose carbamate is manufactured from cellulose having natural plant fibres such as cotton in the form of dissolving type pulp.

In a further embodiment the cellulose carbamate is a mixture of cellulose carbamates manufactured from both cellulose having wood and/or non-wood fibres such as straw in the form of dissolving pulp and cellulose having natural plant fibres such as cotton in the form of dissolving type pulp. In such an embodiment the preferred temperature in the mixing zone is about -7 degrees Celsius or lower.

In a further embodiment, wood fibres derived material, such as dissolving wood pulp, and/or non-wood fibres derived material, such as straw based dissolving pulp, are dissolved at a low temperature and natural plant fibres derived material, such as cotton derived dissolving type pulp, is dissolved under super cooled conditions and the separately obtained carbamate dopes are mixed after the dissolving process.

The said materials dissolvable under low temperature conditions can be also dissolved under super-cooled conditions.

It is preferred to provide cellulose carbamate which has a degree of substitution in a predetermined range that is suitable for application in certain embodiments. The degree of substitution (DS) of the cellulose carbamate polymer determines at least in part the physical and chemical conditions in which the cellulose carbamate can be dissolved in aqueous alkaline solution. This also determines at least in part, the concentration of the solution regarding the cellulose part that may be formed of the cellulose carbamate.

In one embodiment the cellulose carbamate provided has a degree of substitution (DS) of 0.1 to 0.3, in particular about 0.25 or less. After dissolution the DS of the cellulose carbamate diminishes slightly. The degree of substitution of the cellulose carbamate is determined by the total nitrogen content determination according to SFS 5505:1988. The degree of substitution value of 0.24 corresponds to total nitrogen content of 2.0 % per absolute dry water insoluble fraction of the cellulose carbamate.

It is preferred to provide cellulose carbamate which has a degree of polymerization in a predetermined range that is suitable for application in certain embodiments. The degree of polymerization (DP) of the cellulose carbamate polymer determines at least in part the viscosity of the aqueous solution of the recovered cellulose carbamate dope. The degree of polymerization of the cellulose carbamate polymer can be determined by the intrinsic viscosity determination according to ISO 5351.

In one embodiment the cellulose carbamate provided has a degree of polymerization (DP) of DP 200 to DP 400, in particular about DP 220 or higher. The degree of polymerization value of DP 250 corresponds to an intrinsic viscosity of 197 ml/g. The mixture of the cellulose carbamate dope (*e.g*. mixture of cellulose carbamate, alkali, water and possible surfactants-based additives such as polyethylene glycols (PEG), alkylamine or arylamine polyoxy ethylene glycols, alcohol ethoxylates, and fatty alcohol ethers) has a cellulose carbamate content. In one embodiment the mixture of the cellulose carbamate has a cellulose carbamate content of 6 to 10 % by weight (in the mixture of cellulose carbamate and aqueous alkali in the mixing zone or in the cellulose carbamate dope recovered from the dissolving reactor). In a further embodiment the mixture of cellulose carbamate dope has a cellulose carbamate content of 6 to 8 % by weight, which is the typical cellulose carbamate content obtained under low temperature or super-cooled conditions. In a further embodiment the mixture of cellulose carbamate dope has a cellulose carbamate content of 8 to 10 % by weight, which is the preferred cellulose carbamate content under super-cooled conditions.

In one embodiment the aqueous alkaline solution *e.g*. cellulose carbamate dope contains 5 to 10 % NaOH by weight. In a further embodiment the aqueous alkaline solution contains 6 to 8 % NaOH by weight e.g. in the mixture of cellulose carbamate and aqueous alkali in the mixing zone or in the cellulose carbamate dope recovered from the dissolving reactor). In a particular embodiment the aqueous alkaline solution contains 5 to 7% NaOH. This is the preferred amount of NaOH in the alkaline solution when supercooled conditions are applied.

In embodiments the ratio of cellulose carbamate:NaOH can be important in ensuring total dissolution of the cellulose carbamate. In an embodiment the mixture has a cellulose carbamate:NaOH ratio of 6 to 10% by weight:5 to 10% by weight. In a particular embodiment the mixture has a cellulose carbamate:NaOH ratio of 8 to 10% : 5 to 7%, which is the preferred ratio under super-cooled conditions.

In embodiments, the actual reaction rate is not time but temperature dependent. Under low temperature or supercooled conditions the total mass must reach a target temperature. In an embodiment the target temperature is the output temperature of the mixing zone of the dissolving kneader and depends on the chemical composition (cellulose carbamate:NaOH ratio) and the raw material basis (wood and non-wood fibres or natural plant fibres or their mixture). In a further embodiment, the residence time in the mixing zone is at least dependent on the following properties: Mechanical properties and mechanical structure of the kneader type reactor, heat exchange properties of the surfaces in mixing and cooling zone, heat energy released into the system during mixing, cooling power of an external cooling system, feeding temperature of the mixture or feeding temperature of the pre-slurry and alkali solution.

In one embodiment, the residence time is about 1 min to 10 hours, for example 2 min to 2 hours, in particular 2 to 60 min or 2 to 30 min.

In one embodiment alkali hydrolysis of carbamate groups is inhibited, preferably prevented during the dissolving process.

In a further embodiment the method comprises the further step of adding zinc oxide to the mixture. The zinc oxide may be added to the cellulose carbamate, to the alkaline aqueous solution or to the mixture of cellulose carbamate and alkaline aqueous solution. Typically, the zinc oxide is dissolved in aqueous alkaline solution prior to its use as a dissolving lye for the provided cellulose carbamate. In an embodiment the addition of zinc oxide may partly enhance the dissolution and filterability of the solutions and partly prolong the storage time before gelation starts it has also an impact on viscosity of the cellulose carbamate solution and tenacity yield of the obtained wet spun cellulose carbamate fibres. In an embodiment the mixture has a zinc oxide content of 0.1 to 1.5% by weight of the mixture. In one embodiment the mixture is at least partly defined by the ratio of cellulose carbamate to zinc oxide. Thus, in an embodiment the cellulose carbamate has a cellulose carbamate:ZnO ratio of 6 to 10%: 0.1 to 1.5 %, this means 0.01-0.25 t of ZnO per 1 t of cellulose carbamate.

In one embodiment, a method of dissolving cellulose carbamate, in an alkaline aqueous phase to form a solution is provided, comprising the steps of providing cellulose carbamate by carbamation of cotton raw-material; mixing the cellulose carbamate with an aqueous alkaline solution to form a mixture; producing a solution of the cellulose carbamate in the alkaline aqueous phase; and recovering the cellulose carbamate containing aqueous phase, wherein the step of producing the solution is carried out at a temperature of -7 °C or less.

In one embodiment, a further method of dissolving cellulose carbamate in an alkaline aqueous phase to form a solution is provided, comprising the steps of providing cellulose carbamate; mixing the cellulose carbamate with an aqueous alkaline solution to form a mixture; producing a solution of the cellulose carbamate in the alkaline aqueous phase; and recovering the cellulose carbamate containing aqueous phase, wherein the step of producing the solution is carried out at a temperature of 10 °C or less, the cellulose carbamate is first mixed with a first portion of the alkaline solution to produce a pre-slurry, and the pre-slurry thus obtained is fed into the mixing zone, and wherein a second portion of the alkaline solution is separately fed into the mixing zone, the pre-slurry being kept in the mixing zone at a temperature of -1 to -6 °C before the second portion is fed into the mixing zone.

In one embodiment, a continuous dissolution process is obtained by feeding a cellulose carbamate/zincate mixture - said zincate comprising ZnO and NaOH, prepared in one or two stages upon the surface of a, for example, rotating cylinder, on which the temperature of the mixture is lowered to a target temperature in the range from -15 to -20 °C. The cooled material is removed from, e.g. scraped off, the cooling surface, and the temperature of the solid like material can optionally be maintained at the target temperature, or even further cooled before it is adjusted to a suitable temperature for further processing by, for example, filtration, deaeration and spinning. In addition to cylinders, various other devices such as drums, generally having a planar or curved heat conductive surface, which can be cooled, can be used. The surface can be stationary or moving, such as rotating. The above temperature range for cooling is suitable in particular for cotton carbamate and to achieve a solution having a predetermined ratio between the cellulose carbamate and sodium hydroxide and zinc oxide, as discussed herein.

In one embodiment, contact between cellulose carbamate and the zincate solution can be efficiently achieved by mixing, optionally using an agitator or homogenizer before the temperature of the mixture is adjusted to the range which promotes dissolution. Generally, efficient mixing is preferred for improving the contact between the phases and in order to provide a homogeneous mixture, although dissolution will already be achieved by cooling.

In an embodiment of a 2-step method of combining a pre-slurry with a second portion of the zincate solution, it is preferred to use a homogenizer because then the pre-slurry can be pre-cooled at a low NaOH content without initiation of cellulose carbamate dissolution. In such an embodiment, it is preferred to pre-cool the second portion of the zincate to as low a temperature as practical to thereby achieve dissolution upon combination of the pre-slurry and the second zincate portion.

In both a 1- and a 2-step method, a lowering of the temperature of the mixture will initiate at least partial dissolution of the cellulose carbamate, and in a preferred embodiment, the mixture is applied upon the surface of a rotating drum will be technically readily feasible.

A lowering of the temperature of the mixture is advantageous also before application on the surface of a cooled metal surface. Thus, in one embodiment, the mixture fed onto the surface of a cooled metal surface or a cooled cylinder is conducted through a mixing and cooling zone in order to cool the mixture and to achieve partial dissolution before the mixture is being fed onto the surface of the cooled metal surface (for example a metal plate, typically a stainless steel plate) or cooled cylinder (for example of stainless steel).

In one embodiment, dissolution of cellulose carbamate of dissolving pulp is achieved at temperatures higher than those generally applicable to cotton carbamate (-15 to -20 °C).

Based on the afore-going, in a method of continuously producing a solution of cellulose carbamate, the step of producing said solution from said mixture is carried out on the surface of a cooled metal surface or a cooled cylinder, for example a cooled rotating drum. For example, the mixture is fed onto the surface of a cooled metal surface or a cooled cylinder having a temperature of about 0 degrees Celsius or of -7 degrees Celsius or less.

In an embodiment, the cellulose carbamate is first mixed with a first portion of the alkaline solution, and the pre-slurry thus obtained is mixed with a second portion of the alkaline solution and the mixture thus obtained is fed onto the surface of a cooled metal surface or a cooled cylinder.

In one embodiment, the pre-slurry is cooled to a temperature of 0 to -6 degrees Celsius, for example -1 to -6 degrees Celsius, or -2 to -6 degrees Celsius. In one embodiment, the second portion of the alkaline solution is cooled to a temperature of -7 to -30 degrees Celsius. In one embodiment, the temperature of the surface of the cooled metal surface or cooled cylinder is at least about -15 degrees Celsius, for example -15 to about - 20 degrees Celsius or even less, in order to lower the mixture to a target temperature in the range from -15 to -20 °C.

In one embodiment, the mixture is contacted with the surface of the cooled metal surface or a cooled cylinder zone for a period of time of 1 min to 10 hours, for example 2 min to 2 hours, in particular 2 to 60 min or 4 to 30 min.

Dissolving at low temperature and/or under super-cooled conditions provides a cellulose carbamate solution that is of a quality suitably adapted for spinning processes. Cellulose carbamate can be dissolved in a high cellulose consistency to obtain a cellulose carbamate spinning dope with a lower viscosity than would be mathematically and experimentally expected when dissolving in a conventional method. Typically, the viscosity of the cellulose carbamate dope having cellulose carbamate (DP of 250 and DS 0.2 %) content of 8.5 %, NaOH content of 6.5 % and ZnO content of 1.3 % recovered after dissolving subsequent temperation to +20 degrees Celsius using conventional method is higher than 15 Pas. Preferably technically suitable cellulose carbamate spinning dope has viscosity less than 15 Pas. Viscosity of cellulose carbamate spinning dope according to embodiments is preferably <15 Pas. Viscosity of cellulose carbamate spinning dope is measured by ball fall viscosity method at 20 degrees Celsius. Additionally, the present method provides a cellulose spinning dope that is stable for long periods, even at room temperature.

Typically, the temperature of the mixture is maintained at the target temperature for 1 minutes to 30 minutes, for example 3 to 15 minutes.

Next, embodiments will be illustrated by means of the following examples.

### EXAMPLES

### Example 1. Continuous dissolution of cellulose carbamate by one-step method under supercooled conditions starting from recycled cotton derived cellulose carbamate

Cellulose carbamate polymer was provided by means of a carbamation process carried out as described in Finnish Patents Nos. 112869, 112795, and in Finnish Patent Applications Nos. 20175376 and 20195717 and International Patent Application PCT/FI2020/050560.

A mixture of cellulose carbamate polymer and aqueous alkaline solution was formed as follows: A quantity of cellulose carbamate with the degree of polymerisation (DP) of DP 250 (determined as an intrinsic viscosity according to ISO 5351) corresponding to 850 g absolute dry substance with a degree of substitution (DS) of 0.22 (determined as a total nitrogen content according to SFS 5505:1988) was mixed with 9150 g aqueous alkaline solution containing 650 g of sodium hydroxide, 110 g of zinc oxide and 8390 g of water, and stirred for 40 minutes at room temperature of about 20 degrees Celsius in a homogenizer at mixing speed of 700 rpm.

A two-screw extruder model of Berstroff ZE 25x49.5 was used as a kneader type dissolving reactor. Its cooling and mixing zone was consisted of 12 separate barrel units in series. The cylinder walls in each barrel unit were cooled to desired temperature by ethylene glycol refrigerant circuit using an external cooling machine. For continuous dissolving operation the mixing zone was pre-cooled to -20 degrees Celsius. The two-screw extruder was equipped with the funnel and the mixture of the cellulose carbamate polymer in aqueous alkaline solution was fed into the pre-cooled mixing zone and temperature was maintained by the external cooling machine. The feeding rate was set to 3.9-4.0 kg/h by adjusting the rotational speed of the screws to 16 rpm, the moment was 50-53 % and motor' power consumption was 415 W.

The mixture of cellulose carbamate polymer in aqueous alkaline solution was continuously fed into the system for 140 min and the solution of cellulose carbamate in aqueous alkaline solution was recovered by the rate of 3.9-4.0 kg/h. The residence time of the mixture in the mixing zone was 6±0.5 min. Temperature of the recovered solution was between -15.3 and -17.5 degrees Celsius in the output of extruder's mixing zone. The recovered solution was immediately tempered to the temperature of +10 degrees Celsius.

The recovered solution of cellulose carbamate was sampled and characterized with the results as follows: The cellulose carbamate content in the recovered cellulose carbamate solution was 8.5 %, the sodium hydroxide content was 6.5 %, the zinc oxide content was 1.1 %, the ball fall viscosity measured at +20 degrees Celsius was 8.7 Pas and the filterability index (K_{R}) was 0.30 measured at +20 degrees Celsius.

For cellulose carbamate fibre wet spinning the second part of carbamate solution corresponding to the characterized composition was filtered through the 10 µm filter media and deaerated at +10 degrees Celsius for 12 hours. Wet spinning of filtered and deaerated cellulose carbamate dope was carried out using the spin bath optimized for cellulose carbamate process containing e.g. sodium sulphate and free sulphuric acid. The applied godet stretching stress at fibre sampling was 68-71 % under hot bath stretching conditions. The obtained filament titre was 1.3 dtex. Fibre tenacity at break measured from the filament samples was >20 cN/tex (SFS-EN ISO 5079).

### Example 2. Continuous dissolution of cellulose carbamate by two-step method under supercooled conditions starting from recycled cotton derived cellulose carbamate

Cellulose carbamate polymer was provided by means of a carbamation process carried out as described in Finnish Patents Nos. 112869, 112795, and in Finnish Patent Applications Nos. 20175376 and 20195717 and in International Patent Application PCT/FI2020/050560.

The pre-slurry i.e. the mixture of cellulose carbamate polymer and aqueous alkaline solution was formed as follows: A quantity of cellulose carbamate with the degree of polymerisation (DP) of DP 333 (determined as an intrinsic viscosity according to ISO 5351) corresponding to 3840 g absolute dry substance with a degree of substitution (DS) of 0.24 (determined as a total nitrogen content according to SFS 5505:1988) was mixed with the first portion of 46076 g aqueous alkaline solution containing 1497 g of sodium hydroxide, 508 g of zinc oxide and 44071 g of water in a homogenizer for 30 minutes equipped with a cooling jacket. The pre-slurry was cooled and tempered to temperature of +0.6 degrees Celsius and left to gentle mixing to prevent the phase separation. Cellulose carbamate content in the pre-slurry was 7.7 % by weight, sodium hydroxide content was 3.0 % by weight and zinc oxide content was 1.0 % by weight. The second portion of aqueous alkaline solution was separately prepared and cooled to -16.3 degrees Celsius. This solution contained 3620 g of sodium hydroxide, 324 g of zinc oxide and 10141 g of water, thus the sodium hydroxide content was 25.7 % by weight and zinc oxide content was 2.30 % by weight.

A kneader type of model LIST Technology with 14 litres cooling jacketed dissolving chamber, two co-rotating shafts with temperature control and a discharge screw that allows continuous mode operation was served as a kneader type dissolving reactor. The ethylene glycol refrigerant was cooled to -10 degrees Celsius by the external cooling machine and flowed through the jacket of dissolving reactor and its shafts. The cellulose carbamate slurried in the first portion of aqueous alkaline solution and the second portion of aqueous alkaline solution were separately continuously fed at predetermined rates into the mixing and cooling zone of the dissolving reactor by using two separate peristaltic pumps. The pre-slurry feed rate was set to 22.62 kg/h and the second portion feed rate was set to 6.39 kg/h.

The continuous mode operation included the following steps: First the kneader was filled to the desired fill level of 80 % during the predetermined residence time of 25 minutes, next the discharge screw was turned on and its speed was adjusted to maintain the fill level. The reaction was allowed to stabilise for the period equal to the residence time with constant feeding and discharging, where after the collection of the cellulose carbamate solution was started with rate of 29.0 kg/h. The speed of the rotation shafts was 20 rpm. The collection was possible as long as the feeding was stable. The change of one or more of the parameters in between the continuous dissolving process requires a stabilization period equal to the residence time in order to collect representative product. Temperature of the recovered solution was -7.9 degrees Celsius in the output of the mixing zone of the dissolving reactor.

The recovered solution of cellulose carbamate was sampled and characterized with the results as follows: The cellulose carbamate content in the recovered cellulose carbamate solution was 6.2 %, the sodium hydroxide content was 8.1 %, the zinc oxide content was 1.3 %, the ball fall viscosity measured at +20 degrees Celsius was 3.3 Pas and the filterability index (K_{R}) was 1.49 measured at +20 degrees Celsius.

### Example 3: Dissolution of cellulose carbamate in batch by a two-step method under low temperature conditions starting from dissolving wood pulp (pine:spruce) derived cellulose carbamate

Cellulose carbamate polymer was provided by means of a carbamation process carried out as described in Finnish Patents Nos. 112869, 112795 and in International Patent Application PCT/FI2020/050560.

A pre-slurry i.e. a mixture of cellulose carbamate polymer and aqueous alkaline solution was formed as follows: A quantity of cellulose carbamate with the degree of polymerisation (DP) of DP 270 (determined as an intrinsic viscosity according to ISO 5351) corresponding to 29.3 kg absolute dry substance with a degree of substitution (DS) of 0.17 (determined as a total nitrogen content according to SFS 5505:1988) was mixed with the first portion of 310.2 kg aqueous alkaline solution containing 10.3 kg of sodium hydroxide, 1.92 kg of zinc oxide and 300 kg of water in a 500 L batch dissolving reactor tank equipped with a cooling jacket and propeller mixing units setup in two stages. Thus the sodium hydroxide concentration in the pre-slurry was 3.0 % by weight, zinc oxide concentration was 0.57 % by weight and the cellulose carbamate content was 8.6 % by weight. The ethylene glycol refrigerant was cooled to -9 degrees Celsius by the separate cooling machine and flowed through the jacket of dissolving reactor tank. The aqueous alkaline solution was pre-cooled to -2.9 degrees Celsius prior to mixing with the cellulose carbamate polymer in the dissolving reactor tank, the obtained pre-slurry was tempered to temperature level between -1 and -2 degrees Celsius by mixing at about 250 rpm and left to gentle mixing to prevent the phase separation.

A second portion of aqueous alkaline solution was separately prepared and cooled to -18 degrees Celsius. The total amount of the second portion solution was 108 kg containing 25.7 kg of sodium hydroxide, 3.9 kg of zinc oxide and 78.4 kg of water i.e. the sodium hydroxide concentration was 23.8 % by weight and zinc oxide concentration was 3.64 % by weight. The second portion of aqueous alkaline solution was added into the dissolving reactor tank by continuously mixing with the pre-slurry at a mixing speed of 375 rpm. The temperature of the obtained solution of cellulose carbamate in aqueous alkaline solution was -4.5 degrees Celsius in the beginning of mixing of two portions together, the temperature of the solution was raised to 0 degrees Celsius during the prolonged mixing. The obtained solution was recovered at the temperature of 0 degrees Celsius. The target cellulose dope quality was obtained after 15 minutes from addition of the second portion of alkaline solution.

The recovered solution of cellulose carbamate was sampled and characterized with the results as follows: The cellulose carbamate content in the recovered cellulose carbamate solution was 6.5 %, the sodium hydroxide content was 8.0 %, the zinc oxide content was 1.3 %, the ball fall viscosity measured at +20 degrees Celsius was 2.5 Pas and the filterability index (K_{R}) was 3.4 measured at +20 degrees Celsius.

For cellulose carbamate fibre wet spinning the cellulose carbamate solution corresponding to the characterized composition was subsequently filtered using the two-stage backflush filtering process using the 15 µm filter media in the second filtration stage. Wet spinning of filtered and deaerated cellulose carbamate dope was carried out using the spin bath optimized for cellulose carbamate process containing e.g. sodium sulphate and free sulphuric acid. The applied godet stretching stress at fibre sampling was 72-78 % under hot bath stretching conditions. The obtained filament titre was 1.3 dtex. Fibre tenacity at break measured from the filament samples was >20 cN/tex (SFS-EN ISO 5079).

### Example 4. Dissolution of Cellulose Carbamate Solution in batch by two step method under super cooled temperature conditions starting from recycled cotton derived cellulose carbamate

Cellulose carbamate polymer was provided by means of a carbamation process carried out as described in Finnish Patents Nos. 112869, 112795, and in Finnish Patent Applications Nos. 20175376 and 20195717 and in International Patent Application PCT/FI2020/050560.

The pre-slurry i.e. the mixture of cellulose carbamate polymer and aqueous alkaline solution was formed as follows: A quantity of cellulose carbamate with the degree of polymerisation (DP) of DP 265 (determined as an intrinsic viscosity according to ISO 5351) corresponding to 27 kg absolute dry substance with a degree of substitution (DS) of 0.19 (determined as a total nitrogen content according to SFS 5505:1988) was mixed with the first portion of 285 kg aqueous alkaline solution containing 9.45 kg of sodium hydroxide, 3.27 kg of zinc oxide and 276 kg of water in a 500 L dissolving reactor tank equipped with a cooling jacket and propeller mixing units setup in two stages. Thus the sodium hydroxide concentration in the pre-slurry was 3.0 % by weight, zinc oxide concentration was 1.0 % by weight and the cellulose carbamate content was 8.7 % by weight. The ethylene glycol refrigerant was cooled to -9 degrees Celsius by the separate cooling machine and flowed through the jacket of dissolving reactor tank. The aqueous alkaline solution was pre-cooled to -2.5 degrees Celsius prior to mixing with the cellulose carbamate polymer in the dissolving reactor tank, the obtained pre-slurry was tempered to temperature about -2 degrees Celsius by pulse mode stirring at 375 rpm for 10 seconds after standing without mixing every after 10 minutes cooling periods.

A second portion of aqueous alkaline solution was separately prepared and cooled to -26.6 degrees Celsius. The total amount of the second portion solution was 135 kg containing 26.4 kg of sodium hydroxide, 2.6 kg of zinc oxide and 106 kg of water i.e. the sodium hydroxide concentration was 19.7 % by weight and zinc oxide concentration was 1.9 % by weight. The second portion of aqueous alkaline solution was added into the dissolving reactor tank by continuously mixing with the pre-slurry at mixing speed of 375 rpm. The obtained solution was recovered at the temperature of -7.5 degrees Celsius. The target cellulose dope quality was obtained after 15 minutes from addition of the second portion of alkaline solution.

The recovered solution of cellulose carbamate was sampled and characterized with the results as follows: The cellulose carbamate content in the recovered cellulose carbamate solution was 6.0 %, the sodium hydroxide content was 8.0 %, the zinc oxide content was 1.3 %, the ball fall viscosity measured at +20 degrees Celsius was 1.9 Pas and the filterability index (K_{R}) was 2.3 measured at +20 degrees Celsius.

For cellulose carbamate fibre wet spinning the cellulose carbamate solution corresponding to the characterized composition was subsequently filtered using the two-stage backflush filtering process using the 15 µm filter media in the second filtration stage. Wet spinning of filtered and deaerated cellulose carbamate dope was carried out using the spin bath optimized for cellulose carbamate process containing e.g. sodium sulphate and free sulphuric acid. The applied godet stretching stress at fibre sampling was 80-88 % under hot bath stretching conditions. The obtained filament titre was 1.3 dtex. Fibre tenacity at break measured from the filament samples was >20 cN/tex (SFS-EN ISO 5079).

### Example 5. Impact of the dissolving temperature and sodium hydroxide concentration on dissolving of recycled cotton derived cellulose carbamate

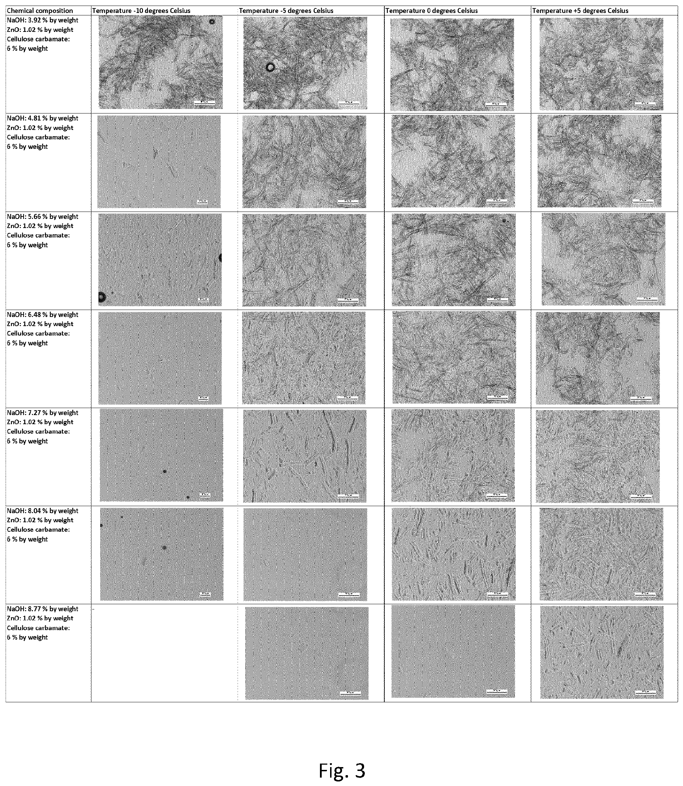

Figure 3 shows the impact of the dissolving temperature and sodium hydroxide concentration on the dissolution of recycled cotton derived cellulose carbamate. The figure comprises 27 micrographs organized in a matrix of four columns and seven rows. The first column shows microscope images of samples at a temperature of -10 °C, the following three show samples at -5 °C, 0 °C and 5 °C, respectively. The rows are organized such that the samples of the first row contain 3.92 wt-% NaOH, and the following six rows, top-down, contain 4.81 wt-%, 5.66 wt-%, 6.48 wt-%, 7.27 wt-%, 8.04 wt-% and 8.77 wt-%, respectively. As will appear, the lower the used dissolving temperature, the lower is the sodium hydroxide content needed for dissolving of cellulose carbamate polymer in the aqueous alkaline solution. As can be further seen, the cellulose carbamate solutions with a sodium hydroxide content equal to or higher than 8.04 % recovered at a temperature equal to or lower than -5 degrees Celsius and higher than -10 degrees Celsius still contain undissolved cellulose carbamate based fragments.

### Example 6. Stability of the pre-slurry in a two-step dissolving process

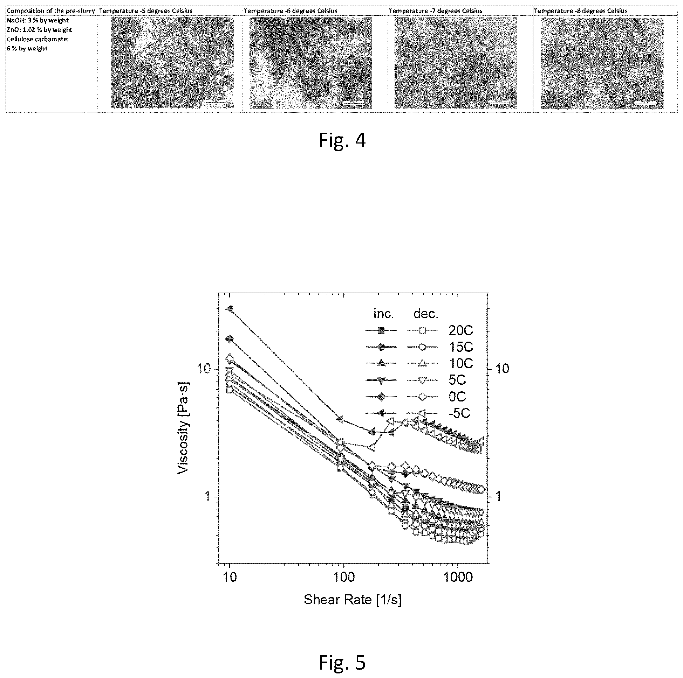

Figure 4 shows the stability of the pre-slurry of a two-stage dissolving process. The figure comprises microscope images of cellulose carbamate samples at four different temperatures, viz. -5 °C, -6 °C, -7 °C, and -8 °C. Cellulose carbamate was slurried in aqueous alkaline solution corresponding to a composition of 3 % by weight of sodium hydroxide, 1.0 % by weight of zinc oxide and 6 % by weight of cellulose carbamate. As will appear from the micrographs of Figure 4, the fibrous structure of recycled cotton derived cellulose carbamate remains undissolved at temperature level up to -6 degrees Celsius, at temperature lower or equal than -7 degrees Celsius dissolving of cellulose carbamate polymer was slightly initiated, and at temperature lower than -8 degrees Celsius the pre-slurry froze.

### Example 7. Stability of the cellulose carbamate polymer slurry in aqueous alkaline solution

Figure 5 shows the stability of cellulose carbamate polymer slurries. The samples were prepared by a one-step dissolving process to the final chemical composition for the dissolution process. For each of the samples, rheometric shear flow curves were obtained for a mixture containing 8.5 % by weight of cellulose carbamate in aqueous solution with 6.5 % by weight of sodium hydroxide and 1.1 % by weight of zinc oxide as a function of temperature (the shear flow being measured at +20, +15, +10, +5, 0 and -5 degrees Celsius). As can be seen, the viscosities measured both towards increased (inc.) and decreased (dec.) shear rates remain constant at temperatures equal to or higher than +5 degrees Celsius. At a temperature equal to or below 0 degrees Celsius the solution begins to resist mixing and simultaneously an increase in viscosity is detected.

### Example 8. Microscope images of solutions of cellulose carbamate

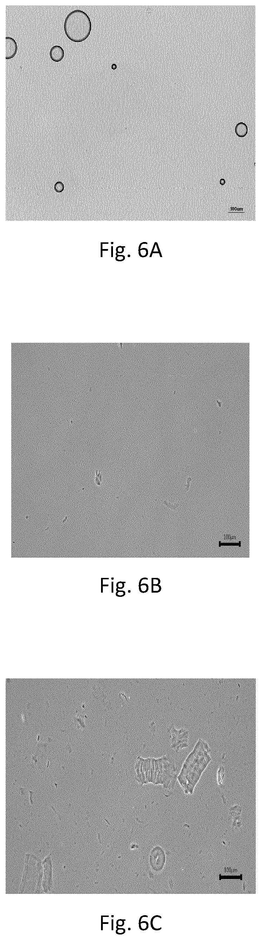

Microscope images of recovered solutions of cellulose carbamate obtained by means of phase contrast mode are shown in Figures 6A to 6C. The micrographs reflected the K_{R} indexes measured from recovered cellulose carbamate solution as described in Examples Nos. 1-4.

Figure 4A represents a cellulose carbamate solution with very good solubility of cellulose carbamate polymer in aqueous alkaline solution. Figure 4B represents a cellulose carbamate solution with good solubility of cellulose carbamate polymer in aqueous alkaline solution. Figure 4C represents a cellulose carbamate solution with poor insufficient solubility of cellulose carbamate polymer in aqueous alkaline solution.

The Kw value and K_{R} index (K_{R} corresponds to viscosity corrected Kw value) indicate filterability of cellulose carbamate solutions. The lower the value, the smaller is the amount of filter clogging size (>10 µm) unreactive particles found in the recovered cellulose carbamate solution.

A cellulose carbamate solution recovered as described in Example No. 1 (Continuous dissolution of cellulose carbamate by one step method under super cooled conditions starting from recycled cotton derived cellulose carbamate) with a measured K_{R} index of 0.30 corresponds to the visual clarity image shown in Figure 4A.

The cellulose carbamate solution recovered as described in Examples No. 2-4 were as follows: Example 2: Continuous dissolution of cellulose carbamate by a two-step method under super cooled conditions starting from recycled cotton derived cellulose carbamate; Example 3: Dissolution of cellulose carbamate in batch by two step method under low temperature conditions starting from dissolving wood pulp (pine:spruce) derived cellulose carbamate; and Example 4: Dissolution of Cellulose Carbamate Solution in batch by two step method under super cooled temperature conditions starting from recycled cotton derived cellulose carbamate. For these examples, the measured KR indexes were 1.49-3.4 corresponding to the visual clarity image in Figure 4B.

### Example 9. Continuous dissolution of cellulose derivative

Cellulose carbamate (powder), with DP of 245 and DS of 0.20 derived from 100 % cotton based textile pulp was used in the following trials.

### Formation of CCA-zincate slurry in one stage:

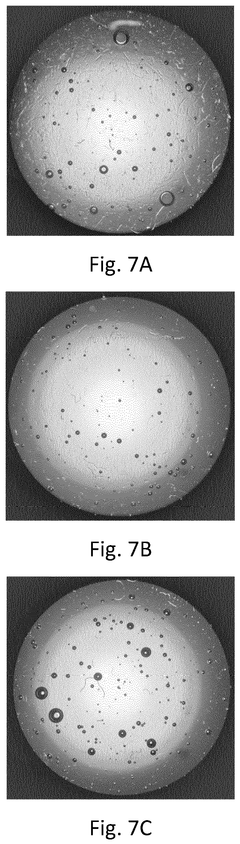

a) CCA powder was slurried in sodium zincate solution by a one-stage process for obtaining a slurry having a CCA content of 8.5 % by weight, a NaOH content of 6.5 % by weight, a ZnO content of 1.3 % by weight: The carbamate-zincate slurry with a temperature of +15 degrees Celsius was instantly cooled on a metal surface, which was pre-cooled to temperature of -20 degrees Celsius prior to application of the slurry onto the metal surface. The contact time on the metal surface was 20 s, during which time the temperature of the slurry reached the temperature of the metal surface, before temperation of the formed CCA dope to +15 degrees Celsius for microscopy (as seen in the picture in FIGURE 7A a dissolution of CCA was not completed).

b) CCA powder was slurried in sodium zincate solution by a one-stage process for obtaining a slurry having a CCA content of 8.5 % by weight, a NaOH content of 6.5 % by weight, a ZnO content of 1.3 % by weight): The slurry was pre-cooled to a temperature of -5.5 degrees Celsius prior to application of the pre-cooled slurry onto the surface of the steel surface, which was pre-cooled to temperature of -20 degrees Celsius. The contact time on the steel surface was 20 s, during which time the temperature of the slurry reached the temperature of the steel surface, before temperation of the formed CCA dope to +15 degrees Celsius for microscopy (as seen in the picture of FIGURE 7B dissolution of CCA was more completed than in case of the initially +15 C slurry).

c) CCA powder was slurried in sodium zincate solution by one-stage process obtaining a slurry having a CCA content of 8.5 % by weight, a NaOH content of 6.5 % by weight, and a ZnO content of 1.3 % by weight: The slurry was pre-cooled to temperature of -5.5 degrees Celsius prior to application of the pre-cooled slurry onto the surface of the steel surface, which was pre-cooled to temperature of -20 degrees Celsius. The contact time on the surface was 20 s, during which time the temperature of the slurry reached the temperature of the steel surface, and the cooled mixture was then instantly removed from the surface contact and temperature was maintained at -20 degrees Celsius for 5 min before temperation of the formed CCA dope to +15 degrees Celsius for microscopy (as seen in the picture of FIGURE 7C dissolution of CCA was even more completed than in case of the trial b with contact time of 20 s at -20 degrees Celsius).

### Formation of CCA-zincate slurry in two stages:

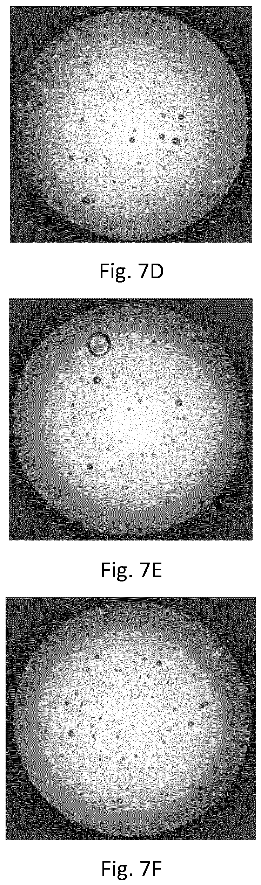

d) Pre-slurry having a CCA content of 10.8 % by weight, a NaOH content of 3.5 % by weight, and a ZnO content of 1.2 % by weight was prepared and pre-cooled to - 0.5 degrees Celsius, a second portion of zincate solution was added (pre-cooled to +5 degrees Celsius) by mixing to obtain the final target composition (8.5 % by weight of CCA, 6.5 % by weight of NaOH and 1.3 % by weight of ZnO). The temperature of the mixture comprising the final target composition was +1 degrees Celsius prior to application onto a steel surface, which was pre-cooled to -20 degrees Celsius. The picture of FIGURE 7D illustrates dissolving rate in mixture before the surface contact (as seen in the picture dissolution was not yet completed).

The picture of FIGURE 7E illustrates dissolving rate of CCA dope after a surface contact time of 20 s at temperature of -20 degrees Celsius (as seen in the picture dissolution was completed with improved clarity compared to one-stage process). During the contact time, the temperature of the slurry reached the temperature of the steel surface.

The picture of FIGURE 7F illustrates dissolving rate of CCA dope after a surface contact time of 20 s at temperature of -20 degrees Celsius and subsequent standing at -20 degrees Celsius for 5 min after surface contact (as seen in the Figure 1f the visual clarity of CCA dope was not significantly increased by further standing at -20 degrees Celsius for 5 min).

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

In the following, some further embodiments are disclosed:
1. Method of dissolving cellulose carbamate in an alkaline aqueous phase to form a solution, comprising the steps of
   - providing cellulose carbamate by carbamation of cotton raw-material;
   - mixing the cellulose carbamate with an aqueous alkaline solution to form a mixture;
   - producing a solution of the cellulose carbamate in the alkaline aqueous phase; and
   - recovering the cellulose carbamate containing aqueous phase,
   wherein the step of producing the solution is carried out at a temperature of -7 °C or less.
2. The method according to embodiment 1, wherein the cotton raw-material comprises virgin cotton, recycled cotton, cotton-containing textiles, or cotton-containing textiles wastes or combinations thereof.
3. The method according to embodiment 1 or 2, wherein the cotton raw-material comprises up to 50 % by weight, preferably 40 % by weight or less of non-cotton cellulosic material, such as wood fibres derived material, e.g. as dissolving wood pulp, and/or non-wood fibres derived material, such as straw based dissolving pulp.
4. The method according to any of the preceding embodiments, wherein the step of producing the solution is carried out at a temperature of less than -7 °C, preferably at -8 °C or less.
5. The method according to any of the preceding embodiments, wherein the step of producing a solution of the cellulose is carried out in a mixing zone, the mixing zone being operated in batch mode, semi-continuously or continuously.
6. The method according to any of the preceding embodiments, wherein the cellulose carbamate is mixed with a first portion of the alkaline solution to produce a pre-slurry, and the pre-slurry thus obtained is fed into the mixing zone and a second portion of the alkaline solution is separately fed into the mixing zone.
7. The method according to embodiment 6, wherein the preslurry is cooled to a temperature of 0 to -6 °C, for example -1 to -6 °C or -2 to -6 °C.
8. The method according to embodiment 6 or 7, wherein the second portion of the alkaline solution is cooled to a temperature of -7 to -30 °C.
9. The method according to any of embodiments 6 to 8, wherein the pre-slurry has a concentration of alkali, such as NaOH, of 2 to 6 % by weight and/or the second portion has a concentration of alkali, such as NaOH, of 10 to 30 % by weight.
10. The method according to any of the preceding embodiments, wherein the cellulose carbamate provided has a degree of polymerization (DP) of about DP 200 or higher, in particular DP 250 to DP 400.
11. The method according to any of the preceding embodiments, wherein the mixture of the cellulose carbamate has a cellulose carbamate content of 6 to 10 % by weight, for example a cellulose carbamate content of 6 to 8 %, or a cellulose carbamate content of 8 to 10 %.
12. The method according to any of the preceding embodiments, wherein the aqueous alkaline solution contains 5 to 10 % NaOH by weight, for example the aqueous alkaline solution contains 7 to 10 % NaOH, or the aqueous alkaline solution contains 5 to 7 % NaOH.
13. The method according to any of the preceding embodiments, wherein the mixture has a cellulose carbamate : NaOH ratio of 6 to 10 % by weight : 5 to 10 % by weight, preferably 6 to 8 % : 7 to 10 %, for example, in particular when operating continuously, 8 to 10 % : 5 to 7 %.
14. Method of dissolving cellulose carbamate in an alkaline aqueous phase to form a solution, comprising the steps of
   - providing cellulose carbamate;
   - mixing the cellulose carbamate with an aqueous alkaline solution to form a mixture;
   - producing a solution of the cellulose carbamate in the alkaline aqueous phase; and
   - recovering the cellulose carbamate containing aqueous phase,
      wherein
   - the step of producing the solution is carried out at a temperature of 10 °C or less and
   - the cellulose carbamate is first mixed with a first portion of the alkaline solution to produce a pre-slurry, and the pre-slurry thus obtained is fed into the mixing zone, and a second portion of the alkaline solution is separately fed into the mixing zone, the pre-slurry being kept in the mixing zone at a temperature of -1 to -6 °C before the second portion is fed into the mixing zone.
15. The method according to embodiment 14, wherein the second portion fed into the mixing zone has a temperature of -7 to -30 °C.
16. The method according to embodiment 14 or 15, wherein the pre-slurry has a concentration of NaOH of 2 to 6 % by weight of the pre-slurry and/or the second portion has a concentration of NaOH of 10 to 30 % by weight of the second portion.
17. The method according to any of embodiments 14 to 16, wherein the mixture has a cellulose carbamate : NaOH ratio of 6 to 10 % by weight : 5 to 10 % by weight, for example 6 to 8 % : 7 to 10 %, for example, in particular when operating continuously, 8 to 10 % : 5 to 7 %.
18. The method according to any of embodiments 14 to 17, wherein the dissolving is carried out at a temperature of about -15 to about -20 °C.
19. The method according to any of embodiments 1 to 18, comprising the steps of
   - providing cellulose carbamate;
   - mixing the cellulose carbamate with an aqueous alkaline solution to form a mixture;
   - conducting the mixture through the mixing zone of a continuously operated kneader type dissolving reactor to produce a solution of said cellulose carbamate in an alkaline aqueous phase; and
   - recovering the cellulose carbamate containing aqueous phase.

In the following, some more further embodiments are disclosed:
1. Method of continuously dissolving cellulose carbamate in an alkaline aqueous phase to form a solution, comprising the steps of
   - providing cellulose carbamate;
   - mixing the cellulose carbamate with an aqueous alkaline solution to form a mixture;
   - producing from said mixture a solution of said cellulose carbamate in an alkaline aqueous phase; and
   - recovering the cellulose carbamate containing aqueous phase,
   wherein the step of producing the solution is carried out at a temperature of 10 degrees Celsius or less.
2. The method according to embodiment 1, wherein the mixture is conducted through a mixing zone of a continuously operated, kneader type dissolving reactor, which kneader type dissolving reactor preferably is also a cooling zone.
3. The method according to embodiment 2, wherein the mixture formed by the cellulose carbamate in the alkaline aqueous solution is subjected to mixing in the mixing zone of the kneader type dissolving reactor at a mixer speed of 10-500 rpm, suitably under 250 rpm, most suitably under 100 rpm, preferably under 50 rpm.
4. The method according to any of the preceding embodiments, wherein the mixture formed by the cellulose carbamate in the alkaline aqueous solution is subjected to cooling in the mixing zone of a kneader type dissolving reactor.
5. The method according to any of the preceding embodiments, wherein the cellulose carbamate is first mixed with the alkaline solution, and the mixture thus obtained is fed into the mixing zone of a continuously operated kneader type dissolving reactor.
6. The method according to any of the preceding embodiments, wherein the cellulose carbamate is first mixed with a first portion of the alkaline solution, and the pre-slurry thus obtained is fed into the mixing zone of a continuously operated mixing kneader and a second portion of the alkaline solution is fed into the mixing zone of a continuously operated mixing kneader.
7. The method according to embodiment 6, wherein the pre-slurry is mixed with a second portion of the alkaline solution in a homogenizer before feeding the mixture thus obtained into a kneader.
8. The method according to embodiment 6 or 7, wherein the pre-slurry is cooled to a temperature of 0 to -6 degrees Celsius, for example -1 to -6 degrees Celsius, or -2 to -6 degrees Celsius.
9. The method according to any of embodiments 6 to 8, wherein the second portion of the alkaline solution is cooled to a temperature of -7 to -30 degrees Celsius.
10. The method according to any of the preceding embodiments, wherein the temperature of the mixture in the mixing zone is about 0 degrees Celsius.
11. The method according to any of the preceding embodiments, wherein the temperature of the mixture in the mixing zone is -7 degrees Celsius or less.
12. The method according to any of the preceding embodiments, wherein the temperature of the mixture in the mixing zone is about -15 to about -20 degrees Celsius.
13. The method according to any of the preceding embodiments, wherein precooling is achieved in a first kneader, whereby partial dissolution can be obtained, after which step the mixture is transferred to a second kneader in which the material is dissolved, typically completely or essentially completely.
14. The method according to embodiment 1, wherein the step of producing said solution from said mixture is carried out on the cooled metal surface or a cooled cylinder, for example a cooled rotating drum.
15. The method according to embodiment 14, wherein the mixture fed onto the cooled metal surface or a cooled cylinder is conducted through a mixing and cooling zone in order to cool the mixture and to achieve partial dissolution before the mixture is being fed onto the cooled metal surface or cooled cylinder, for example a cooled rotating drum.
16. The method according to embodiment 14 or 15, wherein the mixture is fed onto the surface of a cooled metal surface or a cooled cylinder having a temperature of about 0 degrees Celsius or of -7 degrees Celsius or less in order to lower the temperature of the mixture to a temperature in the range of 0 to -7 degrees Celsius.
17. The method according to any of embodiments 14 to 16, wherein the cellulose carbamate is first mixed with a first portion of the alkaline solution, and the pre-slurry thus obtained is mixed with a second portion of the alkaline solution and the mixture thus obtained is fed onto the surface of a cooled metal surface or a cooled cylinder.
18. The method according to embodiment 17, wherein the pre-slurry is cooled to a temperature of 0 to -6 degrees Celsius, for example -1 to -6 degrees Celsius, or -2 to -6 degrees Celsius.
19. The method according to embodiment 17 or 18, wherein the second portion of the alkaline solution is cooled to a temperature of -7 to -30 degrees Celsius.
20. The method according to any of embodiments 14 to 19, wherein the temperature of the surface of the cooled metal surface or cooled cylinder is lower than about 5 degrees Celsius, in particular the temperature is about -15 to about -20 degrees Celsius such that the temperature of the mixture is adjusted to a temperature in the range from about -15 to about -20 degrees Celsius.
21. The method according to any of embodiments 14 to 20, wherein the mixture is contacted with the surface of the cooled metal surface or a cooled cylinder zone for a period of time of 2 seconds to 120 seconds, for example 2 seconds to 60 seconds, in particular 2 to 30 seconds or 2 to 20 seconds.
22. The method according to any of embodiments 14 to 21, wherein the temperature of the mixture is maintained at the target temperature for 1 minutes to 30 minutes, for example 3 to 15 minutes.
23. The method according to any of the preceding embodiments, wherein the cellulose carbamate is manufactured from a dissolving pulp derived from cellulose fibres other than natural plant fibres.
24. The method according to any of embodiments 1 to 22, wherein the cellulose carbamate is manufactured from a dissolving pulp containing natural plants fibers.
25. The method according to any of the preceding embodiments, wherein the cellulose carbamate provided has a degree of polymerization (DP) of about DP 200 or higher, in particular DP 220 to DP 400.
26. The method according to any of the preceding embodiments, wherein the mixture of the cellulose carbamate has a cellulose carbamate content of 6 to 10 % by weight, for example a cellulose carbamate content of 6 to 8 %, or a cellulose carbamate content of 8 to 10 %.
27. The method according to any of the preceding embodiments, wherein the aqueous alkaline solution contains 5 to 10 % NaOH by weight, for example the aqueous alkaline solution contains 7 to 10 % NaOH, or the aqueous alkaline solution contains 5 to 7 % NaOH.
28. The method according to any of the preceding embodiments, wherein the mixture has a cellulose carbamate : NaOH ratio of 6 to 10 % by weight : 5 to 10 % by weight, for example 6 to 8 % : 7 to 10 %, or 8 to 10 % : 5 to 7 %.
29. The method according to any of the preceding embodiments, wherein the residence time of the mixture in the mixing zone of the mixing kneader is adapted to the temperature of the mixture in the mixing zone, in particular the residence time is about 1 min to 10 hours, for example 2 min to 2 hours, in particular 2 to 60 min or 4 to 30 min.
30. The method according to any of the preceding embodiments, wherein the temperature of mixture is maintained at the target temperature for 1 to 60 min, for example for 5 to 30 min.
31. The method according to any of the preceding embodiments comprising the further step of adding zinc oxide to the mixture.
32. The method according to any of the preceding embodiments, wherein the mixture of the cellulose carbamate solution has a zinc oxide content of 0.1-1.5 % by weight.
33. The method according to any of the preceding embodiments, wherein the mixture of the cellulose carbamate has a cellulose carbamate : ZnO ratio of 6 to 10 % : 0.1 to 1.5 %.
34. The method according to any of the preceding embodiments, wherein the cellulose carbamate is manufactured in a process comprising the steps of
   - providing a pulp;
   - adding to the pulp an aqueous solution of urea and optionally hydrogen peroxide to provide a mixture;
   - mechanically working the mixture to provide a homogeneous composition;
   - heating the composition to a temperature in the range of 120 to 155 degrees Celsius; typically 135 degrees Celsius with mixing for a period in the range of 2 to 4 hours to produce cellulose carbamate;
   - recovering the cellulose carbamate; and optionally
   - washing the cellulose carbamate with water and drying in a dryer at a temperature less than or equal to 155 degrees Celsius, preferably 135 degrees Celsius or less, suitably 133 degrees Celsius or less.

### LIST OF REFERENCE SIGNS

| Reference Numbers | |
|---|---|
| 10 | Pulper |
| 20 | Storing Tank |
| 30 | Pump |
| 40 | Dissolving Reactor |
| 100 | Cellulose Carbamate |
| 200 | Aqueous alkaline Solution (total) |
| 300 | Alkaline / cellulose carbamate mixture |
| 330 | Aqueous alkaline solution (total amount) / cellulose carbamate mixture |
| 400 | Cellulose carbamate in aqueous alkaline solution |
| 2000 | First portion of aqueous alkaline solution |
| 2200 | second portion of aqueous alkaline solution |
| 3000 | pre-slurry of cellulose carbamate and aqueous alkaline solution |

### INDUSTRIAL APPLICABILITY

At least some embodiments of the present invention find industrial application in the regeneration of cellulosic fibre derivatives for use in particular in the textile and nonwoven industries or in the pulp and paper industries.

## Claims

1. Method of dissolving cellulose carbamate in an alkaline aqueous phase to form a solution, comprising the steps of
- providing cellulose carbamate;
- mixing the cellulose carbamate with an aqueous alkaline solution to form a mixture, wherein the cellulose carbamate is first mixed with a first portion of the alkaline solution to produce a pre-slurry, and the pre-slurry thus obtained is mixed with a second portion of the alkaline solution;
- producing from said mixture a solution of said cellulose carbamate in an alkaline aqueous phase; and
- recovering the cellulose carbamate containing aqueous phase,
wherein the step of producing the solution is carried out at a temperature of 10 degrees Celsius or less.

2. The method according to claim 1, wherein the pre-slurry is cooled to a temperature of 0 to -6 degrees Celsius, for example -1 to -6 degrees Celsius, or -2 to -6 degrees Celsius.

3. The method according to claim 1 or 2, wherein the second portion of the alkaline solution is cooled to a temperature of -7 to -30 degrees Celsius.

4. The method according to any of the preceding claims, wherein the pre-slurry has a concentration of alkali, such as NaOH, of 2 to 6 % by weight and/or the second portion has a concentration of alkali, such as NaOH, of 10 to 30 % by weight.

5. The method according to any of the preceding claims, wherein the pre-slurry is fed into the mixing zone, and the second portion of the alkaline solution is separately fed into the mixing zone, the pre-slurry preferably being kept in the mixing zone at a temperature of -1 to -6 °C before the second portion is fed into the mixing zone.

6. The method according to any of the preceding claims, wherein the step of producing the solution is carried out by conducting the mixture through a mixing zone of a continuously operated, kneader type dissolving reactor, which kneader type dissolving reactor preferably is also a cooling zone.

7. The method according to claim 6, wherein precooling is achieved in a first kneader, whereby partial dissolution can be obtained, after which step the mixture is transferred to a second kneader in which the material is dissolved, typically completely or essentially completely.

8. The method according to claim 6 or 7, wherein the pre-slurry is mixed with a second portion of the alkaline solution in a homogenizer before feeding the mixture thus obtained into the kneader.

9. The method according to any of claims 5 to 8, wherein the temperature of the mixture in the mixing zone, i.e. the target temperature of the mixture, is about 0 degrees Celsius, or the temperature of the mixture in the mixing zone is -7 degrees Celsius or less, or the temperature of the mixture in the mixing zone is about -15 to about -20 degrees Celsius and, wherein the residence time of the mixture in the mixing zone of the mixing kneader is preferably adapted to the temperature of the mixture in the mixing zone, in particular the residence time is about 1 min to 10 hours, for example 2 min to 2 hours, in particular 2 to 60 min or 4 to 30 min.

10. The method according to any of claims 1 to 5, wherein the step of producing said solution from said mixture is carried out on the surface of a cooled metal surface or a cooled cylinder, for example a cooled rotating drum.

11. The method according to claim 10, wherein the mixture fed onto the surface of the cooled metal surface or the cooled cylinder is conducted through a mixing and cooling zone in order to cool the mixture and to achieve partial dissolution before the mixture is being fed onto the cooled metal surface or cooled cylinder, for example a cooled rotating drum.

12. The method according to claim 10 or 11, wherein the mixture is fed onto the surface of a cooled metal surface or a cooled cylinder having a temperature of about 5 degrees Celsius or about 0 degrees Celsius or of -7 degrees Celsius or less, in particular the temperature is about -15 to about -20 degrees Celsius, in order to lower the temperature of the mixture to a target temperature in the range of 0 to -7 degrees Celsius or in the range of about -15 to about -20 degrees Celsius and, wherein the mixture is preferably contacted with the surface of the cooled metal surface or a cooled cylinder zone for a period of time of 2 seconds to 120 seconds, for example 2 seconds to 60 seconds, in particular 2 to 30 seconds or 2 to 20 seconds.

13. The method according to claim 9 or 12, wherein the temperature of the mixture is maintained at the target temperature for 1 to 60 min, preferably 1 to 30 minutes, for example for 5 to 30 min or 3 to 15 minutes.

14. The method according to any of the preceding claims, wherein the cellulose carbamate is manufactured from a dissolving pulp containing natural plants fibers or from a dissolving pulp derived from cellulose fibres other than natural plant fibres, wherein the cellulose carbamate provided preferably has a degree of polymerization (DP) of about DP 200 or higher, in particular DP 220 to DP 400.

15. The method according to any of the preceding claims, wherein the mixture of the cellulose carbamate has a cellulose carbamate content of 6 to 10 % by weight, for example a cellulose carbamate content of 6 to 8 %, or a cellulose carbamate content of 8 to 10 %, and the aqueous alkaline solution contains 5 to 10 % NaOH by weight, for example the aqueous alkaline solution contains 7 to 10 % NaOH, or the aqueous alkaline solution contains 5 to 7 % NaOH,
wherein the mixture preferably has a cellulose carbamate : NaOH ratio of 6 to 10 % by weight: 5 to 10 % by weight, for example 6 to 8 % : 7 to 10 %, or 8 to 10 % : 5 to 7 %.

16. The method according to any of the preceding claims comprising the further step of adding zinc oxide to the mixture, wherein the mixture of the cellulose carbamate solution preferably has a zinc oxide content of 0.1-1.5 % by weight,
wherein the mixture of the cellulose carbamate preferably has a cellulose carbamate : ZnO ratio of 6 to 10 % : 0.1 to 1.5 %.

17. The method according to any of the preceding claims, wherein the cellulose carbamate is manufactured in a process comprising the steps of
- providing a pulp;
- adding to the pulp an aqueous solution of urea and optionally hydrogen peroxide to provide a mixture;
- mechanically working the mixture to provide a homogeneous composition;
- heating the composition to a temperature in the range of 120 to 155 degrees Celsius; typically 135 degrees Celsius with mixing for a period in the range of 2 to 4 hours to produce cellulose carbamate;
- recovering the cellulose carbamate; and optionally
- washing the cellulose carbamate with water and drying in a dryer at a temperature less than or equal to 155 degrees Celsius, preferably 135 degrees Celsius or less, suitably 133 degrees Celsius or less.
